Europäisches Patentamt

European Patent Office

Office européen des brevets

(11) Publication number: **0 312 256**
**A1**

# EUROPEAN PATENT APPLICATION

(21) Application number: 88309347.8

(22) Date of filing: 07.10.88

(51) Int. Cl.⁴: **F16H 55/50**

(30) Priority: **10.10.87 GB 8723845**

(43) Date of publication of application:
**19.04.89 Bulletin 89/16**

(84) Designated Contracting States:
**DE FR GB**

(71) Applicant: **FLETCHER, SUTCLIFFE, WILD LIMITED**
**Universal Works**
**Horbury Wakefield West Yorkshire WF4 5HR(GB)**

(72) Inventor: **Pentith, Gerald Richard Oldham**
**Rawdon House Rawdon Terrace Rawdon**
**Ashby de la Zouch Leicestershire(GB)**

(74) Representative: **MacGregor, Gordon et al**
**ERIC POTTER & CLARKSON 14 Oxford Street**
**Nottingham, NG1 5BP(GB)**

(54) Pulley wheel tyre.

(57) A pulley wheel tyre comprises a body (11) moulded from hard-wearing plastics material and a plastics insert (20) moulded in the body (11). The body has a groove (16) for receiving a rope and the insert is radially spaced inwardly of the groove. The insert has a different colour from the body so as to provide a visual indication of wear. The insert may be made of relatively resilient material to cushion the body in the groove.

Fig. 1

# PULLEY WHEEL TYRES

The present invention relates to pulley wheel tyres for use with pulley wheels of the type having a peripheral channel for receiving a rope, so as to support and/or guide the rope.

The word "rope" is used herein to include other elongate flexible elements, e.g. chains.

Pulley wheels of this type are commonly used in large conveyor systems, in which a steel rope is supported by such wheels and, in turn, supports a belt. A conveyor system of this type is disclosed in EP-A-0216487.

In such systems, metal-to-metal contact causes rapid wear of the rope and, to avoid this, it is known to provide a liner in the pulley wheel channel.

Tyres of pulley wheels and the like and made of plastics, rubber or elastomeric materials are disclosed in DE-A-2208087; FR-A-2378992; DE-A-1575440; DE-B-1036299 and FR-A-2345632.

GB-A-1384146 discloses friction linings for drive pulleys or drums. The lining comprises a laminated construction in which two layers of small material are bonded together. The layers have the same frictional and/or wear-resilient properties but are differently coloured. A visual indication is therefore provided of the extent of wear as the under layer begins to show through the outer layer.

A problem with this arrangement is that reliance is placed on the strength of the bonding between the layers. Any failure of the bond at any position will cause the outer layer to move relative to the under layer (or layers) and the outer layer will begin to strip away from the under layer, destroying the tyre.

The present invention provides a tyre for a pulley wheel composed of plastics material and having an inner peripheral surface shaped to fit into a channel of a pulley wheel, and an outer peripheral surface formed with a peripheral groove shaped to receive a rope (as herein defined), characterised in that the tyre comprises a moulded body and an insert embedded within the matrix of the body and positioned radially inwardly of the groove and axially inwardly of the radial sides of the tyre so as to provide a visual indication of the extent of wear of the body in the groove.

This arrangement provides for even wear of the tyre with no risk of the tyre disintegrating. The insert provides an indication of the extent of wear and that replacement of the tyre is necessary.

A preferred feature of the invention is that the insert is made from a more resilient plastics material than the body, which is made of hard-wearing material. This arrangement cushions the tyre and reduces wear, so that the tyre has a longer life. The life may be composed of polyurethane with the insert composed of nitrile rubber.

Reference is now made to the accompanying drawings, wherein:-

Figure 1 is a sectional view of a pulley wheel fitted with a first embodiment of a tyre according to the invention;

Figure 3 is a sectional view of a part of a third embodiment of a tyre according to the invention;

Figure 4 is a diametral cross-section of the tyre of Figure 1 along the line 4--4 of figure 5; and

Figure 5 is an axial cross-section of the tyre of Figure 1 along the line 5--5 of Figure 4.

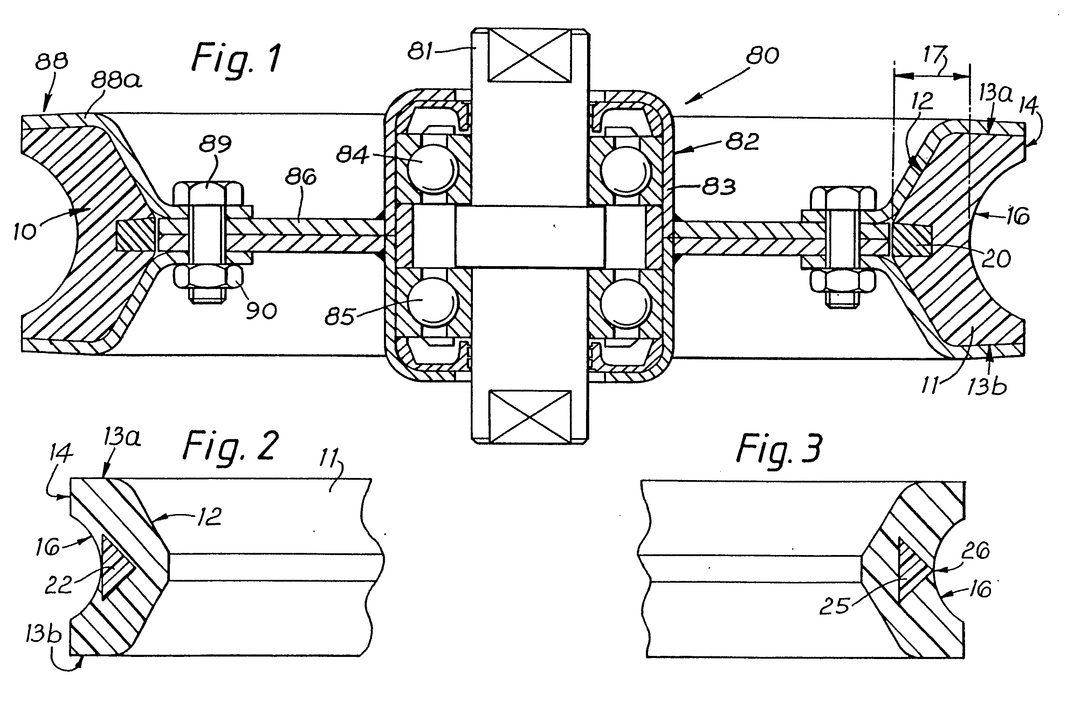

Referring to Figure 1, there is shown a pulley wheel 80 mounted on a shaft 81. The pulley wheel comprises a hub 88 including a casing 83 and ball races 84, 85 accommodated in the casing. A main wheel flange 86 comprises a pair of annular plates extending radially from the casing and carries a peripheral channel member 88. The channel member comprises two annular halves 88a, 88b which are bolted together and to the flange by bolts and nuts 89, 90. By this means, a tyre 10 is mounted in the channel member 88.

The tyre comprises a body 11 of an annular form and moulded from plastics material. The tyre has a radially inner surface 12 and axial surfaces 13a, 13b are shaped to conform to the interior of the channel members. A radial section of the tyre has a generally frusto-conical form at the inner surface.

The tyre has an outer radial surface 14 provided with a peripheral groove 16, of arcuate form as viewed in cross-section, for receiving a rope. The radial thickness 17 of the tyre, as viewed in cross-section, is at least 30% and preferably about 50% of the diameter of the rope for which the tyre is designed, i.e. about 50% of the diameter of an imaginary circle containing the arc 18 defined by the groove.

An annular insert 20 is embedded in the body 11 adjacent the bottom of the groove 16. The insert has a different colour to the body. The insert shown in Figure 1 is of trapezoidal cross-section but other sections may be used. Figure 2, for example shows an insert 22 of regular triangular section with its longest side 21 adjacent to and almost tangential to the groove 16. Figure 3 shows an alternative construction in which the insert 25 is of regular triangular cross-section, but the outer periphery is an edge defined at an apex 26 of the triangle. The apex is located centrally adjacent to the bottom of the groove 16. The triangular inserts are wholly embedded within the body 11 and are thereby secured in position in the body.

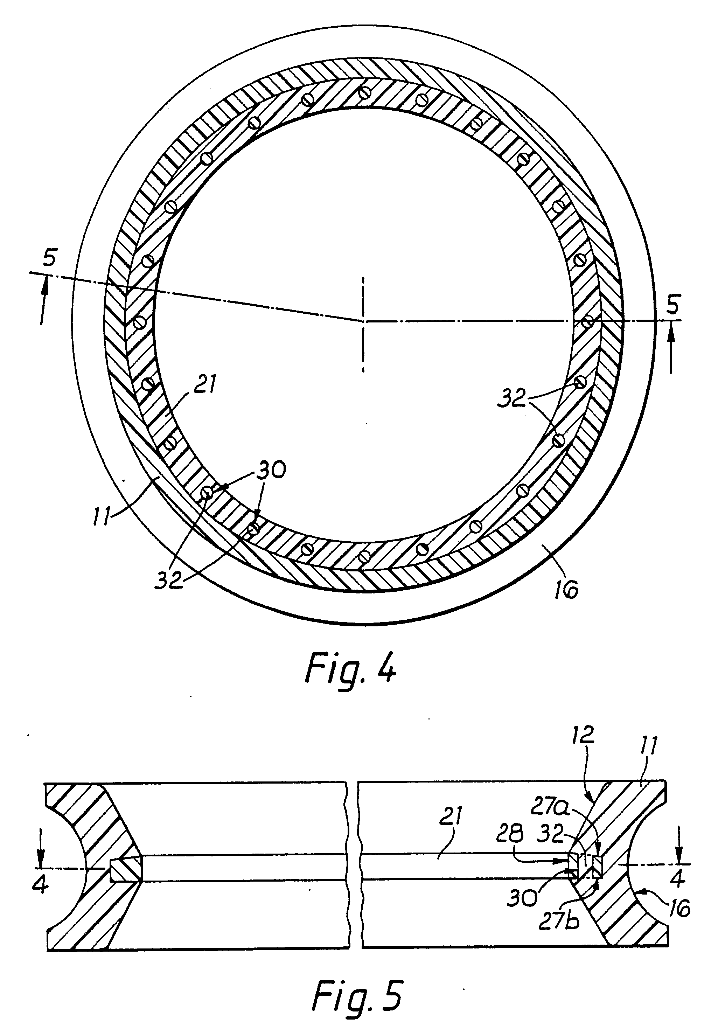

In the Figure 1 embodiment (see also Figures 4 and 5) the annular insert 21 is formed with multiplicity of bores 30 extending from one radial face 27a to the opposite radial face 27b. The body 11 is moulded onto the insert such that the inner peripheral face 28 of the insert forms part of the radially inner surface 12 of the whole tyre and defines a radial land at the centre of the generally frusto-conical shape at the inner surface. The insert is secured in position by plugs 32 of the body in the bores 30, the plugs being formed by flow of material during the moulding process.

The materials of the insert and the body may be the same, e.g. polyurethane, but with the two materials having different colours.

In an alternative embodiment, the insert is made of a more resilient material than the body and this resilience serves to reduce wear at the outer periphery of the tyre.

In an alternative embodiment, the insert is made of a more resilient material than the body and this resilience serves to reduce wear at the outer periphery of the tyre.

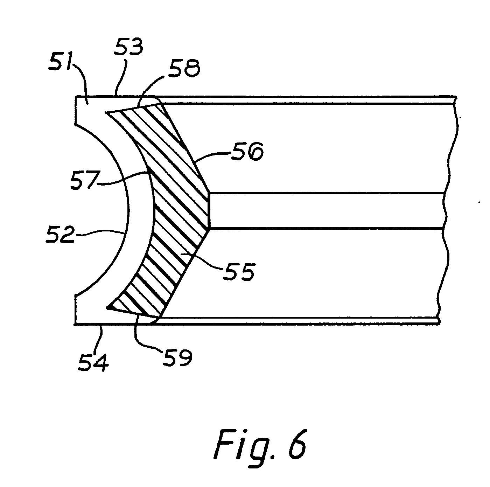

Figure 6 shows a modification in which a relatively larger insert is provided. The tyre has a shape similar to that shown in Figure 1, with the body 51 defining the outer peripheral surface of the tyre, having the groove 52, and the axial end faces 53, 54. The insert 55 defines almost the whole of the inner peripheral surface 56. The insert has a concave outer surface 57 concentric, as viewed in cross-section, with the groove 52. The insert has a side 58, 59 which are inclined at an acute angle to the end faces 53, 54 of the body 51.

The design of the tyre spreads the load exerted by a rope, in use, and also reduces tyre wear. Once the insert becomes visible due to the body outside of the inside having worn away, an indication is provided that replacement of the tyre will soon be necessary.

## Claims

1. A tyre for a pulley wheel composed of plastics material and having an inner peripheral surface (12) shaped to fit into a channel of a pulley wheel, and an outer peripheral surface (14) formed with a peripheral groove (16) shaped to receive a rope (as herein defined), characterised in that the tyre comprises a moulded body (11) and an insert (20, 21, 22) embedded within the matrix of the body and positioned radially inwardly of the groove (16) and axially inwardly of the radial sides of the tyre so as to provide a visual indication of the extent of wear of the body (11) in the groove (16).

2. A tyre according to Claim 1, wherein the insert (20) is composed of a resilient material relative to the material of the body which is of harder wearing material.

3. A tyre according to Claim 1 or 2, wherein the radial thickness (17) of the tyre is at least 30% of the diameter of an imaginary circle containing the arc (18) of the groove (16), as viewed in cross-section.

4. A tyre according to Claim 3 wherein said radial thickness (17) is about 50% of said diameter.

5. A tyre according to any preceding claim, wherein the insert (22) is arranged to be exposed to an extent which expands axially as the bottom of the groove (17) wears.

6. A tyre according to any preceding claim wherein the inner peripheral surface is defined by the insert (20) and the insert has formations (30) to key the insert to the body (11).

7. A tyre according to Claim 6, wherein the formations are bores (30).

Fig. 1

Fig. 2

Fig. 3

EP 0 312 256 A1

Fig. 4

Fig. 5

*Fig. 6*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | DE-A-2 208 087 (DOPPELMAYR) <br> * Whole document * <br> --- | 1 | F 16 H 55/50 |
| D,A | GB-A-1 384 146 (RUHRKOHLE) <br> * Page 2, lines 36-66; figure * <br> ----- | 1 | |

TECHNICAL FIELDS SEARCHED (Int. Cl.4)

B 65 G
F 16 H

The present search report has been drawn up for all claims

| Place of search | Date of completion of the search | Examiner |
|---|---|---|
| THE HAGUE | 13-01-1989 | OSTYN T.J.M. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.....................................................................................
& : member of the same patent family, corresponding
    document

EPO FORM 1503 03.82 (P0401)